# EUROPÄISCHE PATENTANMELDUNG

(11) **EP 4 375 039 A1**
(43) Veröffentlichungstag der Anmeldung: **29.05.2024**
(21) Anmeldenummer: 23208677.7
(22) Anmeldetag: 09.11.2023
(51) Int. Cl.: B29B 17/02, B29L 30/00

(54) **VERFAHREN ZUM ABLÖSEN EINER REIFENSCHICHT**

(30) Priorität: 22.11.2022 DE 102022212440
(71) Anmelder: Continental Reifen Deutschland GmbH, 30175 Hannover (DE)
(72) Erfinder: Matis, Martin, 30165 Hannover (DE); Nosalova, Sona, 30165 Hannover (DE)
(74) Vertreter: Continental Corporation

(57) **Zusammenfassung**

Verfahren zum Abtragen einer freiliegenden Schicht (2) eines Reifens (1), wobei die Schicht (2) durch einen lokalen Energieeintrag an einer Ablösekante (4) der Schicht (2) abgelöst und von dem Reifen (1) abgezogen wird, wobei sich die Position der Ablösekante (4) während des Ablösens entlang des Reifenumfangs verschiebt.

## Beschreibung

Infolge der zunehmenden Verknappung und Verteuerung von Rohstoffen bzw. dem zunehmenden Anliegen gebrauchtes Material wieder zu verwenden soll das Recycling von Reifen verbessert werden.

Ein besonderer Fokus liegt dabei auf Autoreifen. Die Reifen sind beispielsweise aus verschiedenen Schichten aufgebaut. Eine äußere Lauffläche sorgt für die Haftung auf der Straße. Eine Karkasse gibt dem Reifen die erforderliche Stabilität. Eine Innerliner-Schicht macht den Reifen luftdicht. Eine zusätzliche Siegelschicht kann dafür sorgen, dass der Reifen auch bei Eindringen z.B. spitzer Gegenstände in die Reifenschichten luftundurchlässig bleibt.

Um die jeweilige Funktionalität zu erhalten, umfassen die verschiedenen Reifenschichten verschiedene Materialien, die jedoch teilweise kaum oder nicht recycelbar sind. Um hierdurch nicht das Recycling des gesamten Reifens zu verhindern, ist es ein Ziel, ein Verfahren bereitzustellen, um spezifische Schichten von Reifen abzutragen.

Die vorliegende Erfindung betrifft ein Verfahren zum Abtragen einer freiliegenden Schicht eines Reifens, wobei die Schicht durch einen lokalen Energieeintrag an einer Ablösekante der Schicht abgelöst und vom Reifen abgezogen wird, wobei sich die Position der Ablösekante während des Ablösens entlang des Reifenumfangs verschiebt.

Der Energieeintrag erfolgt gemäß einer Ausführungsform bevorzugt kontinuierlich, was hier als gleichmäßig fortdauernd verstanden wird.

Unter einer freiliegenden Schicht wird hier und im Folgenden eine Materialschicht des Reifens verstanden, die an der Oberfläche des Reifens freiliegt. Insbesondere kann die freiliegende Schicht an der inneren Oberfläche des Reifens ausgeprägt sein. Die freiliegende Schicht ist beispielsweise die Innerliner-Schicht des Reifens, also die innere, luftundurchlässige Schicht des Reifens.

In einer Ausführungsform umfasst die freiliegende Schicht eine Siegelschicht oder besteht aus der Siegelschicht, die auf der Oberfläche der Innerliner-Schicht des Reifens aufgebracht ist, um dem Reifen bei einer Verletzung der Innerliner-Schicht luftdicht zu halten. Insbesondere kann die Siegelschicht von der Innerliner-Schicht des Reifens entfernt werden.

In einer weiteren Ausführungsform umfasst die freiliegende Schicht eine funktionelle Schicht oder besteht aus der funktionellen Schicht, die die Fahrgeräusche des Reifens minimiert.

Unter Ablösen wird hier das Ablösen der Schicht vom übrigen Reifen verstanden. Das abgelöste Material kann gesammelt und wieder verwendet werden. Der nach Ablösen und Abziehen der Schicht verbleibende Reifen wird durch das Verfahren bevorzugt nicht verändert.

Unter Abziehen wird hier dem allgemeinen Verständnis entsprechend das Entfernen der Schicht vom Reifen mittels der Anwendung einer Zugkraft verstanden.

Um das abgelöste Material zu sammeln und einen weiteren Kontakt zwischen der abgelösten Schicht und dem Reifen zu vermeiden, kann ein abgelöster Abschnitt der Schicht in einer Ausführungsform direkt nach dem Ablösen auf einen dafür vorhergesehenen Stab aufgewickelt werden. Der Stab ist bevorzugt mit einer Folie oder Schicht bedeckt oder beschichtet, die das anschließende Entfernen der aufgewickelten Schicht vom Stab ermöglicht bzw. vereinfacht.

Unter der Schicht können insbesondere auch Teilschichten des Reifens verstanden werden. Insbesondere soll die Schicht eine Materialschicht sein, die aus einem einheitlichen Material besteht. Die Schicht erstreckt sich bevorzugt über den gesamten Umfang des Reifens, kann sich aber auch nur über einen Teil des Umfangs des Reifens erstrecken. Die Schicht erstreckt sich bevorzugt über die gesamte Breite des Reifens, kann sich aber auch nur über ein Teil der Breite des Reifens erstrecken.

Die Schicht unterscheidet sich bezüglich ihrer Materialeigenschaften wie beispielsweise ihrer Viskosität von den angrenzenden Schichten des Reifens. Insbesondere kann die Schicht aus einem Material bestehen, das aufwändiger zu recyceln ist als das übrige Material des Reifens oder das gar nicht recycelbar ist.

Unter der Ablösekante wird hier die Kante zwischen dem Abschnitt der abzulösenden Schicht, der bereits abgelöst ist und einem Abschnitt der abzulösenden freiliegenden Schicht, der noch nicht vom Reifen abgelöst ist, bezeichnet. Die Ablösekante verläuft bevorzugt auf einer Umfangfläche des Reifens senkrecht zum Reifenumfang.

Eine erste Ablösekante kann erzeugt werden, indem an der Oberfläche der freiliegenden Schicht lokal Energie eingetragen wird. Bevorzugt wird hierbei eine Ablösekante gebildet, die senkrecht zur Umfangsrichtung des Reifens ist. Die erste Ablösekante wird quasi in die freiliegende Schicht geschnitten.

Durch den lokalen Energieeintrag entlang der Ablösekante wird die freiliegende Schicht im Folgenden weiter abgelöst, sodass sich die Ablösekante in der Umfangsrichtung des Reifens fortbewegt.

Durch das beschriebene Verfahren, kann eine Schicht also einfach und unter Umständen ohne direkten Kontakt mit einem Werkzeug präzise und sauber vom Reifen entfernt werden. Ein solches Verfahren ermöglicht bzw. erleichtert somit auch das Recycling des Reifens bzw. der verbleibenden Reifenschichten. Auch das abgetragene Material kann recycelbar sein.

Der lokale Energieeintrag kann beispielsweise annähernd punktförmig oder linienförmig oder in Form vieler separater Punkte, die beispielsweise in regelmäßigen Abständen angeordnet sind, erfolgen.

In einer Ausführungsform erfolgt der lokale Energieeintrag mechanisch.

In einer weiteren Ausführungsform erfolgt der lokale Energieeintrag thermisch.

In einer weiteren Ausführungsform erfolgt der lokale Energieeintrag per Ultraschall.

In weiteren Ausführungsformen können verschiedene Formen und Arten des Energieeintrags kombiniert werden.

In einer Ausführungsform erfolgt der lokale Energieeintrag durch Bestrahlung mit Wasser. Hierzu wird ein Wasserstrahler mit einer oder mehrerer Düsen nahe an die Oberfläche der freiliegenden Schicht gebracht und die Oberfläche entlang der Ablösekante mit Wasser bestrahlt.

Der Wasserstrahl kann annähernd punktförmig sein und entlang der Ablösekante bewegt werden oder kann linienförmig sein und gleichzeitig die gesamte Ablösekante oder einen Abschnitt der Ablösekante bestrahlen.

Der Vorteil dieser Ausführungsform ist, dass das Werkzeug nicht direkt mit der freiliegenden Schicht in Kontakt gebracht wird. So wird verhindert, dass sich das abgelöste Material an das Werkzeug anheftet und dieses unbrauchbar macht oder eine Säuberung des Werkzeuges notwendig macht.

Der Energieeintrag kann über den Wasserdruck so eingestellt werden, dass selektiv die abzulösende freiliegende Schicht abgelöst wird.

Weiterhin kann der Energieeintrag über die Wassertemperatur eingestellt werden. Bei einer niedrigen Temperatur, beispielsweise Raumtemperatur, weist die abzulösende Schicht eine höhere Viskosität auf als bei erhöhten Temperaturen über Raumtemperatur. Um ein Abziehen einer zusammenhängenden Schicht zu erreichen, sind daher bevorzugt niedrige Temperaturen, zum Beispiel Raumtemperatur, zu wählen. Dies vereinfacht das Sammeln und spätere Weiterverarbeiten der dann abgelösten Schicht. Mit höheren Temperaturen kann in Ausführungsformen das Ablösen der freiliegenden Schicht vereinfacht bzw. beschleunigt werden.

Weiterhin kann in weiteren Ausführungsformen, in denen der lokale Energieeintrag ansonsten nicht über Wasser erfolgt, mithilfe eines Wasserbades eine gewünschte Temperatur der freiliegenden und abzulösenden Schicht eingestellt werden, um deren Viskosität zu kontrollieren. Die abzulösende Schicht oder zumindest ein Abschnitt der Schicht, an dem der Ablösevorgang vorgenommen wird, ist dazu in das Wasserbad getaucht.

In einer Ausführungsform erfolgt der lokale Energieeintrag mittels eines mechanischen Werkzeuges wie eines Schneiders, eines Schleifwerkzeuges oder eines Spatels. Diese Ausführungsform hat den Vorteil, dass sie einfach umzusetzen und zu implementieren ist.

In einer Ausführungsform erfolgt der lokale Energieeintrag mittels eines Ultraschallschneiders oder eines ähnlichen vibrierenden Werkzeuges. Zum Beispiel kann alternativ auch ein vibrierendes Schleifwerkzeug verwendet werden.

Beim Ultraschallschneiden wird der mechanische Energieeintrag einer Schneideklinge durch die Anregung der Schneideklinge mit einer Ultraschallfrequenz verstärkt.

Der Ultraschallschneider kann entlang der Ablösekante bewegt werden, um entlang der gesamten Ablösekante einen weiteren Abschnitt der freiliegenden Schicht abzulösen.

Die Ultraschallschwingungen verhindert weiterhin, dass sich das abgelöste Material an das Werkzeug anheftet und dieses unbrauchbar macht oder eine Säuberung des Werkzeuges notwendig macht.

Der Energieeintrag kann so eingestellt werden, dass selektiv die abzulösende freiliegende Schicht abgelöst wird.

In einer Ausführungsform erfolgt der Energieeintrag mithilfe eines heißen Spatels. Der mechanische Energieeintrag des Spatels wird durch die thermische Energie bei Erhitzung des Spatels verstärkt.

Der Spatel kann entlang der Ablösekante bewegt werden, um entlang der gesamten Ablösekante einen weiteren Abschnitt der freiliegenden Schicht abzulösen.

Die im Vergleich zur Umgebung erhöhte Temperatur des heißen Spatels verhindert weiterhin, dass sich das abgelöste Material an das Werkzeug anheftet und dieses unbrauchbar macht oder eine Säuberung des Werkzeuges notwendig macht.

Der Energieeintrag kann über die Temperatur des Spatels so eingestellt werden, dass selektiv die abzulösende freiliegende Schicht abgelöst wird.

In einer Ausführungsform erfolgt der Energieeintrag durch Bestrahlung mit Laser. Ein Laserstrahl kann entlang der Ablösekante bewegt werden, um einen Abschnitt der freiliegenden Schicht entlang der gesamten Ablösekante abzulösen.

Der Vorteil dieser Ausführungsform ist, dass das Werkzeug, also der Laserstrahler, nicht direkt mit der freiliegenden Schicht in Kontakt gebracht wird. So wird verhindert, dass sich das abgelöste Material an das Werkzeug anheftet und dieses unbrauchbar macht oder eine Säuberung des Werkzeuges notwendig macht.

Der Energieeintrag kann über den Laser so eingestellt werden, dass selektiv die abzulösende freiliegende Schicht abgelöst wird.

Gemäß einer Ausführungsform weist die freiliegende Schicht eine geringere Viskosität als eine darunter liegende Schicht auf. Die darunter liegende Schicht grenzt bevorzugt direkt an die freiliegende Schicht an. Aufgrund der unterschiedlichen Viskosität der Schichten kann durch das Einstellen des Betrags an zugeführter Energie die freiliegende Schicht selektiv entfernt werden.

Gemäß einer Ausführungsform wird der Reifen während des Verfahrens kontinuierlich so angeordnet, dass ein abgelöster Abschnitt der Schicht durch die Wirkung der Schwerkraft selbstständig vom Reifen abgezogen wird. Ein abgelöster Abschnitt der freiliegenden Schicht fällt also direkt nach dem Ablösen nach unten, d.h. in Richtung Erdboden, sodass das Abziehen der Schicht vereinfacht und beschleunigt wird.

Wenn der abgelöste Abschnitt noch mit dem nicht abgelösten Abschnitt der freiliegenden Schicht in Verbindung steht, wird der Reifen so positioniert, dass der abgelöste Abschnitt durch die Wirkung der Schwerkraft vom Reifen wegschwenkt.

Auf einen zusätzlichen Schritt zum Entfernen des abgelösten Materials bzw. des abgelösten Abschnitts der Schicht kann somit verzichtet werden. Bevorzugt kann dann auch auf den Einsatz des zuvor eingeführten Stabes verzichtet werden.

Gemäß einer Ausführungsform werden nach dem Ablösevorgang der freiliegenden Schicht am Reifen verbleibende Reste der freiliegenden Schicht in einem anschließenden Nachbehandlungs- oder Säuberungsschritt entfernt. Bevorzugt ist dieser Verfahrensschritt nicht notwendig, wenn bereits in einem ersten Schritt die freiliegende Schicht komplett entfernt wird.

Die Nachbehandlung kann insbesondere mittels eines Lasers erfolgen. So können Reste der freiliegenden Schicht durch eine Bestrahlung mit Laser entfernt werden. Durch den Energieeintrag des Lasers werden die Reste der freiliegenden Schicht dann verdampft.

Durch diesen Nachbehandlungsschritt kann eine vollständige und saubere Entfernung der freiliegenden Schicht gewährleistet werden.

Gemäß einer Ausführungsform wird nach dem Entfernen der freiliegenden Schicht die darunter liegende Schicht entfernt. Beide Schichten können auch gleichzeitig entfernt werden. Beispielsweise können die Siegelschicht und die Innerliner-Schicht des Reifens gleichzeitig oder nacheinander entfernt werden.

Die Entfernung einer freiliegenden Schicht kann mittels abrasiven Mediums erfolgen, die Entfernung einer anderen freiliegenden Schicht mittels der Bestrahlung mit Laser oder mittels einer anderen abtragenden Methode. Zum Beispiel kann im ersten Schritt die Siegelschicht mittels Beaufschlagung mit abrasiven Medium entfernt werden und einem weiteren Schritt die Innerliner-Schicht mittels Lasereinstrahlung entfernt werden.

Gemäß einer Ausführungsform wird die freiliegende Schicht automatisiert durch einen Roboter entfernt. Der Roboter kann automatisiert die Positionierung des Reifens, die Positionierung des Werkzeuges und den Ablösevorgang sowie eventuelle Nachbehandlungsschritte ausführen.

Eine Automatisierung ist vor allem für die Handhabung großer Stückzahlen vorteilhaft.

Weiterhin betrifft die vorliegende Erfindung ein Recyclingverfahren für Reifen, wobei eine Schicht des Reifens mittels des zuvor beschriebenen Verfahrens entfernt wird und der übrige Reifen ohne die entfernte Schicht anschließend recycelt wird.

Das durch das zuvor beschriebene Verfahren entfernte Material kann getrennt wiederverwertet werden.

Im Folgenden werden Ausführungsbeispiele der Erfindung anhand von Figuren erläutert. Die Erfindung ist nicht auf die folgenden Ausführungsbeispiele beschränkt.
Figur 1 zeigt eine beispielhafte Fotografie eines Reifens mit Siegelschicht.
Figur 2 zeigt einen Ausschnitt einer perspektivischen Ansicht einer Reifeninnenseite, wobei eine abzulösende Siegelschicht auf einer Innerliner-Schicht des Reifens aufgebracht ist.
Figur 3 zeigt ein beispielhaftes Verfahren, bei dem die Siegelschicht mittels eines erhitzten oder schwingenden Werkzeuges abgelöst wird anhand eines Querschnitts durch die inneren Schichten eines Reifens.
Figur 4 zeigt ein weiteres beispielhaftes Verfahren, bei dem die Siegelschicht mittels Wasserstrahlen abgelöst wird anhand eines Querschnitts durch die inneren Schichten eines Reifens.
Figur 5 zeigt ein weiteres beispielhaftes Verfahren, bei dem die Siegelschicht per Laserbestrahlung abgelöst wird anhand eines Querschnitts durch die inneren Schichten eines Reifens.
Figur 6 zeigt eine bevorzugte Anordnung des Reifens während dem Ablösen der Schicht am Beispiel des Ausschnitts aus Figur 1.

Die am Innenumfang des Reifens freiliegende Oberfläche ist im vorliegenden Beispiel mit einer Siegelschicht beschichtet. Die Siegelschicht verhindert, dass der Reifen bei einer Perforation von äußeren Reifenschichten und einer Innerliner-Schicht des Reifens luftundurchlässig wird.

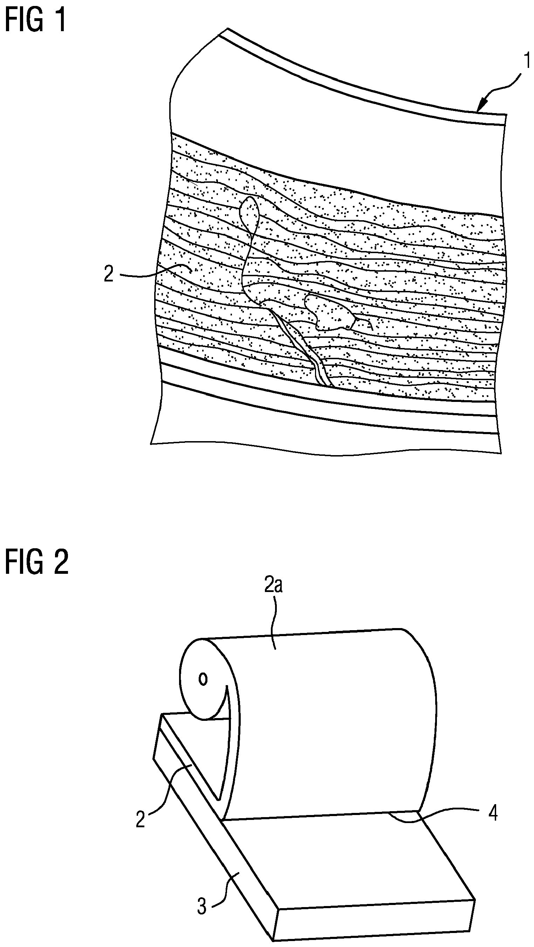

Eine beispielhafte Fotografie eines Reifens 1 ist in Figur 1 dargestellt.

Rollt der Reifen beispielsweise über einen spitzen Gegenstand, perforiert dieser spitze Gegenstand beispielsweise die äußeren Schichten des Reifens und die Innerliner-Schicht, sodass ein Reifen ohne Siegelschicht nicht mehr luftundurchlässig wäre.

Die Siegelschicht weist bevorzugt eine hohe Elastizität und Viskosität auf und verformt sich bei Eindringen des beispielsweise spitzen Gegenstandes wird von dem Gegenstand aber nicht perforiert. So bleibt der Reifen mit Siegelschicht luftundurchlässig.

Die Siegelschicht kann selbst aus mehreren Schichten bestehen. So kann die Siegelschicht z.B. eine zusätzliche Teilschicht umfassen, die so modifiziert ist, dass sie die Fahrgeräusche des Reifens reduziert.

Die speziellen Eigenschaften der Siegelschicht, die zum Beispiel eine ContiSeal^{™}-Schicht und/oder eine ContiSilent^{™}-Schicht umfasst, erschweren jedoch deren Recycelbarkeit. Da die Schicht nur schwer oder nicht zu recyceln ist, muss die Siegelschicht vor dem Recycling des Reifens bevorzugt von übrigen Reifen entfernt werden. Die Entfernung der Schicht muss möglichst vollständig und sauber erfolgen. Der übrige Reifen soll dabei nicht verändert werden. Aufgrund der hohen Zahl an zu recycelnden Reifen ist ein automatisiertes Verfahren vorzuziehen.

In Figur 2 ist schematisch dargestellt wie die Siegelschicht 2 als Beispiel für eine freiliegende Schicht von der Oberfläche der darunterliegenden Innerliner-Schicht 3 entfernt wird. Hierfür wird die Siegelschicht 2 am Übergang von Siegelschicht 2 zu Innerliner-Schicht 3 durch einen lokalen Energieeintrag abgelöst und anschließend entfernt.

Das Ablösen der Siegelschicht 2 erfolgt entlang einer Ablösekante 4, die bevorzugt senkrecht zur Umfangsrichtung des Reifens 1 verläuft. Der abgelöste Abschnitt der Siegelschicht 2a kann anschließend aufgerollt oder abgeschnitten werden und dann gesammelt und gegebenenfalls wieder verwendet werden.

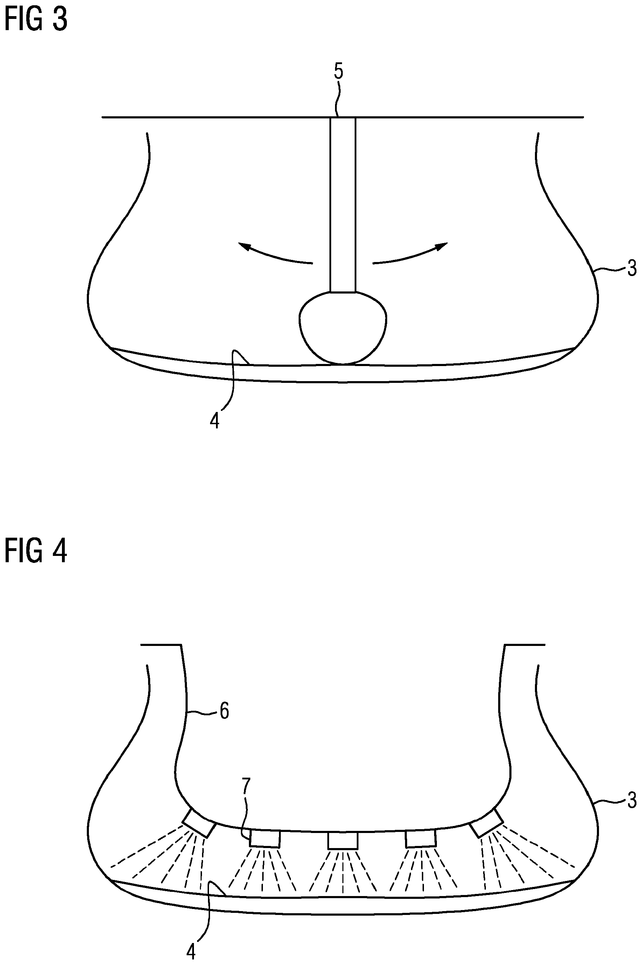

In Figur 3 ist ein beispielhaftes Verfahren dargestellt, wobei der Energieeintrag an der Ablösekante 4 über ein Werkzeug 5, das hier schematisch dargestellt ist, erfolgt. Das Werkzeug 5 ist grundlegend ein mechanisches Werkzeug wie eine Schneideklinge oder ein Spatel. Der Energieeintrag wird jedoch thermisch oder durch Ultraschall unterstützt.

Beispielsweise handelt es sich bei dem Werkzeug 5 um einen Ultraschallschneider, um ein vibrierendes Schleifwerkzeug oder einen heißen Spatel. Die Temperatur des heißen Spatels kann gezielt bei ... °C eingestellt werden. Die Schwingungsfrequenz des Ultraschallschneiders kann gezielt bei ... Hz eingestellt werden.

Das Werkzeug 5 wird nach links und rechts entlang der Ablösekante 4 bewegt, sodass es die gesamte Ablösekante 4 abfährt und einen Teilabschnitt 2a der Siegelschicht 2 über die gesamte Breite des Reifenumfangs ablöst.

In Figur 4 ist ein alternatives Ausführungsbeispiel gezeigt, indem anstelle eines mechanischen Werkzeuges 5 ein Wasserstrahler 6 benutzt wird. Der Wasserstrahler 6 umfasst bevorzugt mehrere Düsen 7 auf, sodass bevorzugt die gesamte Breite der Ablösekante 4 gleichzeitig mit Wasser bestrahlt werden kann. In der Figur sind z.B. fünf Düsen dargestellt.

Über den Wasserdruck, der variabel eingestellt werden kann, kann sichergestellt werden, dass selektiv die Siegelschicht abgetrennt wird.

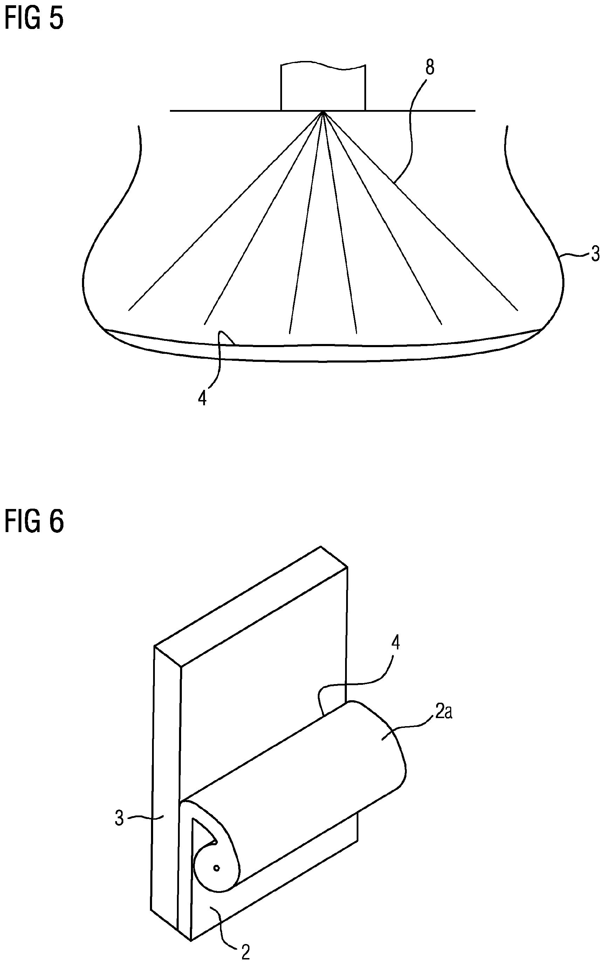

In Figur 5 ist ein weiteres alternatives Ausführungsbeispiel dargestellt, wobei als Werkzeug zum Ablösen der Schicht diesmal ein Laserstrahl 8 dient. Bevorzugt wird mittels mehrerer Laserstrahlen 8 die Ablösekante 4 über ihre gesamte Breite angestrahlt.

In Figur 6 ist dargestellt, dass nach dem Ablösen der Siegelschicht 2, die Siegelschicht 2 alleine durch die Wirkung der Schwerkraft von der Oberfläche der Innerliner-Schicht 3 wegschwenkt und sich selbstständig aufgerollt.

Dieser Vorgang wird durch eine geeignete Ausrichtung des Reifens 1, die kontinuierlich verändert werden muss, da sich die Ablösekante 4 durch die Ablösung der Teilschicht 2a kontinuierlich bewegt, erreicht.

Das selbstständige Aufrollen der abgelösten Siegelschicht 2a wird insbesondere durch deren elastische Eigenschaften erreicht.

### Bezugszeichenliste

- 1: Reifen
- 2: freiliegende Schicht
- 2a: abgelöster Abschnitt der Schicht
- 3: Innerliner-Schicht
- 4: Ablösekante
- 5: Werkzeug
- 6: Wasserstrahler
- 7: Düse
- 8: Laser

## Patentansprüche

1. Verfahren zum Abtragen einer freiliegenden Schicht (2) eines Reifens (1), wobei die Schicht (2) durch einen lokalen Energieeintrag an einer Ablösekante (4) der Schicht (2) abgelöst und von dem Reifen (1) abgezogen wird, wobei sich die Position der Ablösekante (4) während des Ablösens entlang des Reifenumfangs verschiebt.

2. Verfahren nach Anspruch 1, wobei der lokale Energieeintrag kontinuierlich erfolgt.

3. Verfahren nach Anspruch 1 oder 2, wobei der lokale Energieeintrag durch Bestrahlung mit Wasser erfolgt.

4. Verfahren nach einem der Ansprüche 1 bis 3, wobei der lokale Energieeintrag mittels eines mechanischen Schneidegerätes (5), eines Ultraschallschneiders (5) oder eines heißen Spatels (5) erfolgt.

5. Verfahren gemäß einem der Ansprüche 1 bis 4, wobei der lokale Energieeintrag durch Bestrahlung mit Laser (8) erfolgt.

6. Verfahren gemäß einem der Ansprüche 1 bis 5, wobei die freiliegende Schicht (2), die eine geringere Viskosität als eine darunterliegende Schicht (3) des Reifens (1) aufweist, selektiv vom Reifen (1) entfernt wird.

7. Verfahren gemäß einem der Ansprüche 1 bis 6, wobei der Reifen (1) kontinuierlich immer so angeordnet wird, dass ein abgelöster Abschnitt (2a) der Schicht (2) durch die Wirkung der Schwerkraft vom Reifen (1) entfernt wird.

8. Verfahren gemäß einem der Ansprüche 1 bis 7, wobei nach dem Energieeintrag verbleibende Reste der freiliegenden Schicht (2) in einem anschließenden Säuberungsschritt entfernt werden.

9. Verfahren gemäß einem der Ansprüche 1 bis 8, wobei die Schicht (2) automatisiert durch einen Roboter entfernt wird.

10. Recyclingverfahren für Reifen (1), wobei eine Schicht (2) des Reifens (1) mittels eines Verfahrens gemäß einem der Ansprüche 1 bis 9 vom Reifen (1) entfernt wird und der übrige Reifen (1) ohne die entfernte Schicht (2) anschließend recycelt wird.
